# EUROPEAN PATENT SPECIFICATION

(11) **EP 1 486 450 B1**
(45) Date of publication and mention of the grant of the patent: **16.03.2011**
(21) Application number: 01981018.3
(22) Date of filing: 08.11.2001
(51) Int. Cl.: B66B 11/08, B66D 1/28, F16C 33/66

(54) **HOIST AND ELEVATOR EQUIPMENT**
HUB- UND AUFZUGEINRICHTUNG
PALAN ET EQUIPEMENT DE LEVAGE

(43) Date of publication of application: 15.12.2004
(73) Proprietor: MITSUBISHI DENKI KABUSHIKI KAISHA, Chiyoda-ku Tokyo 100-8310 (JP)
(72) Inventor: INOUE, Kenji, Chiyoda-ku, Tokyo 100-8310 (JP); SAGAWA, Hirofumi, Chiyoda-ku, Tokyo 100-8310 (JP); IIDA, Yasumasa Mitsubishi Elec Engineer.Co., Ltd., Chiyoda-ku, Tokyo 100-0004 (JP)
(74) Representative: HOFFMANN EITLE
(86) International application number: PCT/JP2001/009763
(87) International publication number: WO 2003/040013

(56) References cited:
- FR-A- 2 633 914
- JP-A- 61 223 369
- JP-A- 2001 278 571
- JP-B2- 1 051 684
- JP-B2- 7 088 889
- JP-U- 3 064 987
- JP-U- 3 064 987
- JP-Y2- 2 585 472

## Description

### Field of the Invention

The invention relates to a hoisting machine and an elevator system, and more particularly, to a hoisting machine and an elevator system, having a sheave supported on a spindle by way of a bearing, wherein a passenger car and a counterweight are vertically moved by means of driving a pull cable passed around the sheave.

### Background Art

In connection with a hoisting machine for use with an elevator system having a sheave supported on a spindle by way of a bearing, a technique for lubricating a bearing with grease without involvement of disassembly of a hoisting machine has hitherto been known, and this technique is aimed at increasing the longevity of the bearing.

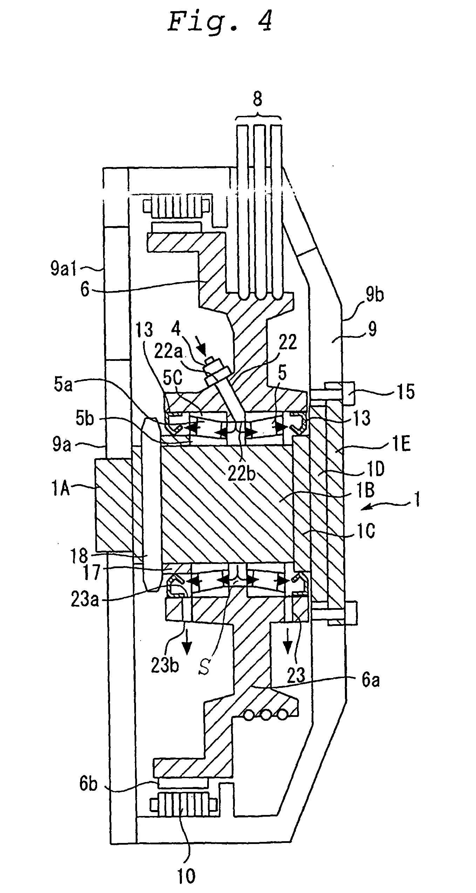

A known hoisting machine will be described hereinbelow by reference to Fig. 4. Fig. 4 is a schematic cross-sectional view showing a known hoisting machine.

In the drawing, reference numeral 1 designates a spindle; 1A to 1E designate step sections which constitute a part of the spindle 1 and differ in diameter from each other; 4 designates a nipple provided at the entrance of a grease feed passage; 5 designates a bearing which engages with the spindle 1; 5a designates a rolling section of the bearing 5 formed from a ball or the like; 5b designates an inner ring of the bearing 5; 5c designates an outer ring of the bearing 5; 6 designates a sheave 6 which is supported on the spindle 1 by way of the bearing 5 and rotates about the spindle 1; 6a designates a main body section of the sheave 6 around which a pull cable is passed; 6b designates a magnet provided on a rim of the sheave 6; 8 designates a pull cable passed over substantially half the circumference of the main body section 6a; 9 designates a housing for housing therein a part of the spindle 1, the bearing 5, the sheave 6, and other elements of the hoisting machine; 9a designates a front surface of the housing 9; 9a1 designates a hole which is formed in the front surface 9a and enables packing of grease for lubrication into the nipple 4 from the outside of the housing 9; 9b designates a rear surface of the housing 9; 10 designates a stator provided on an internal wall section of the housing 9 for constituting a rotary motor in conjunction with the magnet 6b; 13 designates a seal, such as an oil seal, provided on the periphery of the bearing 5; 15 designates a bolt to be used for fastening the spindle 1 to the housing 9; 17 designates a collar which engages with a rim of the spindle 1 and with which a lip section of the seal 13 comes into contact; 18 designates a nut which is screw-engaged with an external thread section formed on the spindle 1 and positions the bearing 5 and the collar 17 in the direction of thrust; 22 designates a grease feed passage provided in the sheave 6; 22a designates an entrance of the grease feed passage 22; 22b designates an exit of the grease feed passage 22; 23 designates a grease discharge passage provided in the sheave 6; 23a designates an entrance of the grease discharge passage; and 23b designates an exit of the grease discharge passage.

Both ends of the spindle 1 are supported on the housing 9. Specifically, the spindle 1 having the plurality of steps 1A to 1E is inserted into the housing 9 by way of the rear surface 9b. The step section 1E of the spindle 1 formed so as to assume the largest diameter is fitted into a stepped hole section formed in the rear surface 9b of the housing 9. The step section 1A of the spindle 1 formed to assume the smallest diameter is fitted into a hole formed in the front surface 9a of the housing 9.

The bearing 5 corresponds to two roller bearings, and the roller bearings are provided on the step section 1B corresponding to a main body section of the spindle 1 and spaced apart from each other by a space S in the axial direction of the spindle 1. The exit 22b of the grease feed passage 22 provided in the sheave 6 to be used for effecting greasing is opened toward the space S. The entrance 23a of the grease discharge passage 23 provided in the sheave 6 to be used for discharging grease is opened toward the space existing between the bearings 5 and the seal 13. The exit 23b of the grease discharge passage 23 is opened in the housing 9 toward the outside of the sheave 6.

The nipple 4 provided at the entrance 22a of the grease feed passage 22 is formed so as to be able to mate with a grease gun (not shown) acting as a grease supply device. Grease can be supplied to the grease feed passage 22 from the outside by way of the nipple 4.

Although omitted from the drawings, the hoisting machine having the foregoing construction is installed in a machinery room or hoistway within the elevator system. The pull cable 8 passed around the sheave 6 of the hoisting machine suspends at one end thereof the passenger car and at the other end the counterweight. The sheave 6 is rotated forward or backward around the spindle 1 by means of the rotary motor formed from the magnet 6 and the stator 10. As a result, the pull cable 8 is driven, thereby vertically actuating the passenger car and the counterweight suspended on the pull cable 8.

In relation to the hoisting machine provided in the elevator system having such a construction, the bearings 5 are lubricated with grease by way of the grease feed passage 22 with a view toward increasing the longevity of the bearing 5, as required. A method for lubricating the hoisting machine with grease will now be described.

First, the hoisting machine is brought to a stop. The sheave 6 is rotated such that the nipple 4 provided in the sheave 6 approaches the hole 9a1 of the housing 9. Then, the grease gun is inserted into the hole 9a1 of the housing 9 so as to mate with the nipple 4, thereby greasing the bearings 5. Grease is continuously supplied from the grease gun, and a downstream portion of grease reaches the space S between the bearings 5 while sequentially passing by the nipple 4 and the grease feed passage 22 as if being pushed by an upstream portion of the grease. Moreover, the grease that has reached the space S enters a space defined between the inner rings 5b, the outer rings 5c, and the plurality of rolling elements 5a in the bearings 5. Subsequently, the grease arrives at the outside of the bearings 5 (i.e., a space existing between the bearings 5 and the seal 13). The grease that has reached the outside of the bearings 5 is discharged outside of the sheave 6 from the exits 23b by way of the grease discharge passage 23.

As mentioned above, the downstream portion of the grease is squeezed by the upstream portion of the same within the grease feed passage and flows in the directions of the arrows in the drawing. As a result, the grease that has become deteriorated as a result of having already been used over a predetermined period of time can be replaced with new grease.

After completion of the above-described lubricating operation, the grease that has entered the space between the inner ring 5b, the outer ring 5c, and the plurality of rolling elements 5a in the bearings 5 fills a nominal space existing between the rolling elements 5a and the inner rings 5b and that existing between the rolling elements 5a and the outer rings 5c, thereby lessening the degree to which the rolling elements 5a, the inner rings 5b, and the outer rings 5c are abraded.

However, the foregoing known hoisting machine presents problems in terms of ease of lubricating the spindle with grease. First, in order to effect greasing, the sheave 6 must be rotated, to thereby move the nipple 4 provided in the sheave 6 to a predetermined location, which in turn is responsible for deterioration of workability. Second, in order to effect greasing, the grease gun must be inserted into the hoisting machine, which in turn is responsible for deterioration of workability. Third, utmost caution must be paid to prevent rotation of the sheave 6 during the course of greasing operation. Fourth, in order to discharge grease into the hoisting machine from the exit 23b of the grease discharge passage 23, operations for cleaning grease for the sake of preventing faulty operation, which would be caused by discharged grease; e.g., disassembly of the housing, must be performed, if necessary.

JP 03 064987 U discloses a bearing wherein feed oil holes are formed in a rotary shaft or a boss part and oil, fed through the feed oil hole, is discharged through a gap between a bearing press and the rotary shaft.

### Disclosure of the Invention

The invention has been conceived to solve the above described problems and is aimed at providing a hoisting machine and an elevator system which enable easy and reliable lubrication of a bearing in a hoisting machine with grease and offers high workability and reliability.

According to the present invention, there is provided a hoisting machine having a spindle and a bearing to be engaged with the spindle, comprising a grease feed passage for supplying grease to the bearing from the outside provided in the spindle; and characterised in that the spindle further has a grease discharge passage for discharging, to the outside, grease supplied to the bearing.

In embodiments of the invention, grease can be supplied to the nonrotational, stationary grease feed passage. Therefore, lubrication of a bearing with grease can be performed easily and reliably.

Also in embodiments of the invention, grease is discharged from the hoisting machine via the grease discharge passage. Hence, a necessity for a troublesome operation for cleaning grease from the inside of a housing is obviated, thereby rendering operation for greasing a bearing efficient.

In preferred embodiments of the invention, an entrance of the grease feed passage provided in the spindle is opened toward the outside of the housing of the hoisting machine. As a result, grease can be supplied directly from the outside without a necessity for inserting a grease gun into the hoisting machine. Hence, operation for greasing a bearing can be performed readily and reliably.

In further preferred embodiments of the invention, an exit of the grease feed passage provided in the spindle is opened toward the space existing between two bearings. As a result, new grease can be supplied to the two bearings from the outside. Hence, increased longevity of bearings can be achieved by mitigating internal abrasion of the bearings.

In even further preferred embodiments of the present invention, an exit of the grease discharge passage provided in the spindle is opened toward the outside of the housing of the hoisting machine. Further, a seal is provided around the periphery of the bearing. As a result, grease is discharged to the outside of the hoisting machine via the grease discharge passage without being splashed within the housing. Hence, a necessity for a troublesome operation for cleaning grease from the inside of a housing is obviated, thereby rendering operation for greasing a bearing efficient.

In yet further preferred embodiments of the invention, an entrance of the grease discharge passage provided in the spindle is opened toward rolling elements of a roller bearing. As a result, the grease that has been deteriorated as a result of being circulated through the inside of the bearing is led to the grease discharge passage and can be discharged to the outside of the hoisting machine. Hence, a necessity for a troublesome operation for cleaning grease from the inside of a housing is obviated, thereby rendering operation for greasing a bearing efficient.

In accordance with even yet further preferred embodiments of the invention, there is provided an elevator system provided with the improved hoisting machine. By means of this machine, a bearing provided in a hoisting machine can be lubricated with grease easily and reliably. Hence, a highly-reliable elevator system which offers excellent ease of maintenance can be provided.

### Brief Description of the Drawings

For a better understanding of the invention and to show how the same may be carried into effect, reference will now be made, by way of example, to the accompanying drawings, in which:
Fig. 1 is a schematic cross-sectional view of an embodiment of a first preferable hoisting machine according to the invention;
Fig. 2 is a schematic cross-sectional view of an embodiment of a second preferable hoisting machine according to the invention;
Fig. 3 is a schematic cross-sectional view of an embodiment of a third preferable hoisting machine according to the invention; and
Fig. 4 is a schematic cross-sectional view of a known hoisting machine.

### Detailed Description

The invention will be described in more detail by reference to the accompanying drawings. Throughout the drawings, like or corresponding elements are assigned like numerals, and their repeated explanations are simplified or omitted, as required.

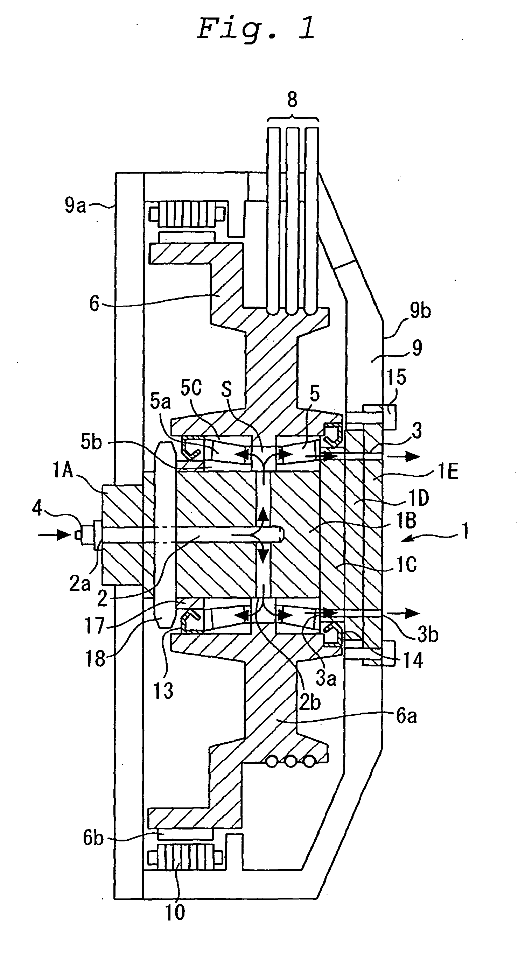

Fig. 1 is a schematic cross-sectional view of a hoisting machine according to a first embodiment of the invention.

In the drawings, reference numeral 1 designates a spindle; 1A to 1E designate step sections which constitute a part of the spindle 1 and differ in diameter from each other; 2 designates a grease feed passage provided in the spindle 1; 2a designates an entrance of the grease feed passage 2; 2b designates an exit of the grease feed passage 2; 3 designates a grease discharge passage provided in the spindle 1; 3a designates an entrance of the grease feed passage 3; 3b designates an exit of the grease feed passage 3; 4 designates a nipple provided at the entrance 2a of the grease feed passage 2; 5 designates a bearing which engages with the spindle 1; 5a designates a rolling section of the bearing 5 formed from a roller, a ball or the like; 5b designates an inner ring of the bearing 5; 5c designates an outer ring of the spindle 1 by way of the bearing 5 and rotates about the spindle 1; 6a designates a main body section of the sheave 6 around which a pull cable is passed; 6b designates a magnet provided on a rim of the sheave 6; 8 designates a pull cable passed over substantially half the circumference of the main body section 6a; 9 designates a housing for housing therein a part of the spindle 1, the bearing 5, the sheave 6, and other components of the hoisting machine; 9a designates a front surface of the housing 9; 9b designates a rear surface of the housing 9; 10 designates a stator provided on an internal wall section of the housing 9 for constituting a rotary motor in conjunction with the magnet 6b; 13, 14 designate seals, such as oil seals, provided on the periphery of the bearing 5; 15 designates a bolt to be used for fastening the spindle 1 to the housing 9; 17 designates a collar which engages with a rim of the spindle 1 and with which a lip section of the seal 13 comes into contact; and 18 designates a nut which is screw-engaged with an external thread section formed on the spindle 1 and positions the bearing 5 and the collar 17 in the direction of thrust.

Both ends of the spindle 1 are supported on the housing 9. Specifically, the spindle 1 having the plurality of steps 1A to 1E is inserted into the housing 9 by way of the rear surface 9b. The step section 1E of the spindle 1 formed so as to assume the largest diameter is fitted into a stepped hole section formed in the rear surface 9b of the housing 9. The step section 1A of the spindle 1 formed to assume the smallest diameter is fitted into a hole formed in the front surface 9a of the housing 9. Here, the housing 9 is formed from two parts; that is, a part including the front surface 9a and another part including the rear surface 9b, and these parts are formed so as to be detachably attached together.

The bearing 5 corresponds to two roller bearings, and the roller bearings are provided on the step section 1B corresponding to a main body section of the spindle 1 and spaced apart from each other by a space S in the axial direction of the spindle 1. The entrance 2a of the grease feed passage 2 provided in the spindle 1 for effecting greasing is opened in an exposed section exposed outside the housing 9 (i.e., the surface of the step 1A of the spindle 1). The exit 2b of the grease feed passage 2 is opened toward the space S between the two bearings 5. The grease feed passage 2 is constituted of a first passage extending from the entrance 2a to the center of the step section 1B along substantially the center axis of the spindle 1, and a plurality of second passages radially extending from the first passage toward the exit 2b. The first and second passages of the grease feed passage 2 are formed by subjecting the spindle 1 that has undergone turning to secondary machining such as drilling.

The entrance 3a for the plurality of grease discharge passages 3 provided in the spindle 1 for discharging grease is opened toward the rolling members 5a of the bearings 5; that is, a space defined between the inner rings 5b and the outer rings 5c. The plurality of exits 3b for the grease discharge passages 3 are opened in another exposed section exposed to the outside of the housing 9 (i.e., the surface of the step 1E of the spindle 1). The plurality of grease discharge passages 3 are flow channels which extend from the entrance 3a substantially in parallel with the center axis of the spindle 1 and toward the exits 3b while passing through the step sections 1C to 1E. As in the case of the grease feed passage 2, the grease discharge passages 3 are formed by subjecting the spindle that has undergone turning to secondary machining; e.g., drilling.

Of the two seals 13, 14, a lip section of the seal 13 provided at a position close to the front surface 9a of the housing 9 remains in pressing contact with the rim of the collar 17, thereby preventing splashing of the grease supplied to the bearings 5 within the housing 9. A lip section of the seal 14 provided at a position close to the rear surface 9b of the housing 9 remains in pressing contact with the rim of the step section 1C of the spindle 1, thereby preventing splashing of the grease supplied to the bearings 5 within the housing 9. The seal 14 provided at a position close to the rear surface 9b is formed so as to become larger in diameter than the seal 13 provided at a position close to the front surface 9a.

The nipple 4 disposed at the entrance 2a of the grease feed passage 2 is formed so as to be able to mate with the grease gun (not shown) serving as a device for supplying grease. The grease can be supplied to the grease feed passage 2 from the outside by way of the nipple 4.

Although not shown in the drawing, the hoisting machine having the foregoing construction is installed in a machinery room or a hoistway within the elevator system. The pull cable 8 passed around the sheave 6 of the hoisting machine suspends at one end thereof the passenger car and at the other end the counterweight. The sheave 6 is rotated forward or backward about the spindle 1 by means of the rotary motor formed from the magnet 6b and the stator 10. As a result, the pull cable 8 is driven, thereby vertically actuating the passenger car and the counterweight suspended on the pull cable 8.

In relation to the hoisting machine provided in the elevator system having such a construction, the bearings 5 are lubricated with grease by way of the grease feed passage 2, with a view toward increasing the longevity of the bearing 5, as required. A method for lubricating the hoisting machine with grease will now be described.

First, the hoisting machine is brought to a stop. The grease gun is fitted to the nipple 4 from the outside of the housing 9, thereby greasing the bearings 5. Specifically, grease is continuously supplied from the grease gun, and a downstream portion of grease reaches the space S between the bearings 5 while sequentially passing by the nipple 4 and the grease feed passage 2 as if being pushed by an upstream portion of the grease. Moreover, the grease that has reached the space S enters a space defined between the inner rings 5b, the outer rings 5c, and the plurality of rolling elements 5a in the bearings 5. Subsequently, the grease arrives at the outside of the bearings 5 (i.e., a space existing between the bearings 5 and the seals 13, 14). The grease that has reached the outside of the bearings 5 is discharged from the hoisting machine via the exits 3b, by way of the grease discharge passage 3. Of the two bearings 5, the grease that has entered the left bearing 5 in the drawing flows along a circulatory to-and-fro passage which is established in gaps existing among the inner rings 5b, the outer rings 5c, and the plurality of rolling elements 5a (the gaps are equal in number to the plurality of rolling elements 5a). More specifically, in relation to adjacent spaces, one space acts as a passage through which flow is effected from right (a space S) to left (the seal 13) in the drawing, and another space acts as a passage through which flow is effected from left to right in the drawing. In this way, the downstream portion of the grease having entered the left bearing 5 is squeezed by the upstream portion of the grease and discharged out of the hoisting machine by way of the right bearing 5 and the grease discharge passage 3 after having passed through the circulatory passage.

The grease being discharged from the grease discharge passage 3 to the outside of the hoisting machine does not pose any substantial problem. For this reason, the operation for discharging grease is not necessary in principle. Alternatively, grease can be discharged by use of a pan or the like located below the hoisting machine. In any event, the construction of the grease discharge passage 3 obviates a necessity for performing maintenance on the hoisting machine from the rear surface 9b, thereby improving ease of installation of the hoisting machine in the elevator system. More specifically, the rear surface 9b of the hoisting machine having the exits 3b of the grease discharge passage 3 can be located close to, e. g. , a wall of the hoistway. The size of the hoistway can be reduced by an amount corresponding to an extent by which the rear surface of the hoisting machine is brought close to the wall of the hoistway. Hence, space savings can be achieved.

As mentioned above, the downstream portion of the grease flows in the direction of the arrow along the flow channel of grease as if being squeezed by the upstream portion of the grease. As a result, the grease that has become deteriorated as a result of having already been used over a predetermined period of time can be replaced with new grease.

After the greasing operation has been completed, the grease having entered the spaces between the inner rings 5b, the outer rings 5c, and the plurality of rolling elements 5a, all belonging to the bearings 5, fills the nominal space between the rolling elements 5a and the inner rings 5b and the nominal space between the rolling elements 5a and the outer rings 5c, while the sheave 6 rotates. Therefore, mitigating the extent to which the rolling elements 5a, the inner rings 5b, and the outer rings 5c are abraded.

As has been described, the hoisting machine of the first embodiment enables easy and reliable greasing of the bearings 5 disposed in the hoisting machine, thereby improving ease of maintenance. Specifically, the grease feed passage 2 to be used for supplying grease from the outside to the bearings 5 is formed in the nonrotational spindle 1. Further, the entrance 2a of the grease feed passage 2 is opened toward the outside of the hoisting machine. Therefore, the nipple 4 is fixed to a stationary position with respect to the hoisting machine. Insertion of the grease gun into the hoisting machine for greasing purpose is also not required, and greasing can be effected directly from the outside of the hoisting machine. Further, paying extra attention to the rotation of the sheave 6 during the course of greasing operation becomes unnecessary. Grease is discharged from the hoisting machine via the exits 3b of the grease discharge passage 3, thereby obviating troublesome operation for cleaning grease from the inside of the housing 9.

The bearing 1 of the first embodiment is not limited to the illustrated tapered roller bearing but can also be embodied as a roller bearing, such as a conic roller bearing or a ball bearing.

In the first embodiment, greasing operation is commenced after the hoisting machine has been brought to a stop. However, if vertical movement of thepassengercardoes not affect greasing operation at all, at the case that, for example, the hoisting machine is installed in the machinery room, greasing can be effected without stopping the hoisting machine. In this case, ease of greasing operation is improved to a much greater extent.

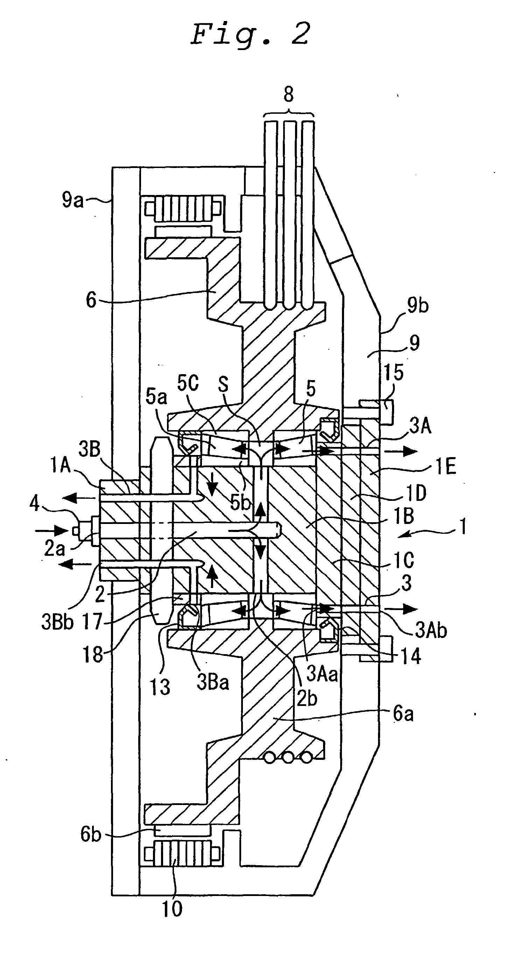

Fig. 2 is a schematic cross-sectional view showing a hoisting machine according to a second embodiment of the invention. The second embodiment differs from the first embodiment in terms of only the construction of the grease discharge passage provided in the spindle 1.

In Fig. 2, reference numeral 1 designates a spindle; 2 designates a grease feed passage provided in the spindle 1; 3A designates a first grease discharge passage provided in the spindle 1; 3Aa designates an entrance of the first grease discharge passage 3Aa; 3Ab designates an exit of the first grease discharge passage 3A; 3B designates a second grease discharge passage provided in the spindle 1 and a collar 17; 3Ba designates an entrance of the second grease discharge passage 3B; and 3Bb designates an exit of the second grease discharge passage 3B.

Here, in relation to the grease feed passage 2 provided in the spindle 1 for effecting greasing, the entrance 2a is opened toward the outside of the housing 9, and the exit 2b is opened toward the space S existing between the two bearings 5.

As in the case of the first embodiment, the first grease discharge passage 3A provided in the spindle 1 for discharging grease is opened toward the rolling elements 5a of the bearings 5, and the exit 3Ab is opened toward the outside of the housing 9. Moreover, the second grease discharge 3B is opened toward the space between the bearings 5 and the seal 13, and the exit 3Bb is opened toward the outside of the housing 9. As illustrated, the second grease discharge passage 3B is formed from a second passage extending from the exit 3Bb to the center of the step section 1B substantially in parallel with the center axis of the spindle 1, and a first passage extending from the entrance 3Ba in the direction perpendicular to the center axis of the spindle 1 and passing through the spindle 1 while penetrating through the collar 17 so as to communicate with the second passage.

As in the case of the first embodiment, grease is supplied from the grease gun fitted to the nipple 4 to the bearings 5 in the hoisting machine of the elevator system having the foregoing construction. Specifically, grease is continuously supplied from the grease gun, and a downstream portion of the grease sequentially reaches the space S between the bearings 5 by way of the nipple 4 and the grease feed passage 2 as if being squeezed by an upstream portion of the grease. The grease that has reached the space S enters the space existing between the inner rings 5b, the outer rings 5c, and the plurality of rolling elements 5a, all belonging to the bearings 5. Subsequently, the grease reaches the outside of the bearings 5. Of the two flows of grease having reached the outside of the two bearings 5, one flow of grease is discharged from the hoisting machine via the exit 3Ab by way of the first grease discharge passage 3A. The other flow of grease is discharged from the hoisting machine via the exit 3Bb by way of the second grease discharge passage 3B. Specifically, the downstream portion of the grease is caused to flow in the directions of the arrows and is discharged from the front surface 9a and the rear surface 9b of the hoisting machine as if being squeezed by the upstream portion of the grease.

As has been described, as in the case of the first embodiment, the hoisting machine of the second embodiment enables easy and reliable greasing of the bearings 5 provided in the hoisting machine, thus improving ease of maintenance.

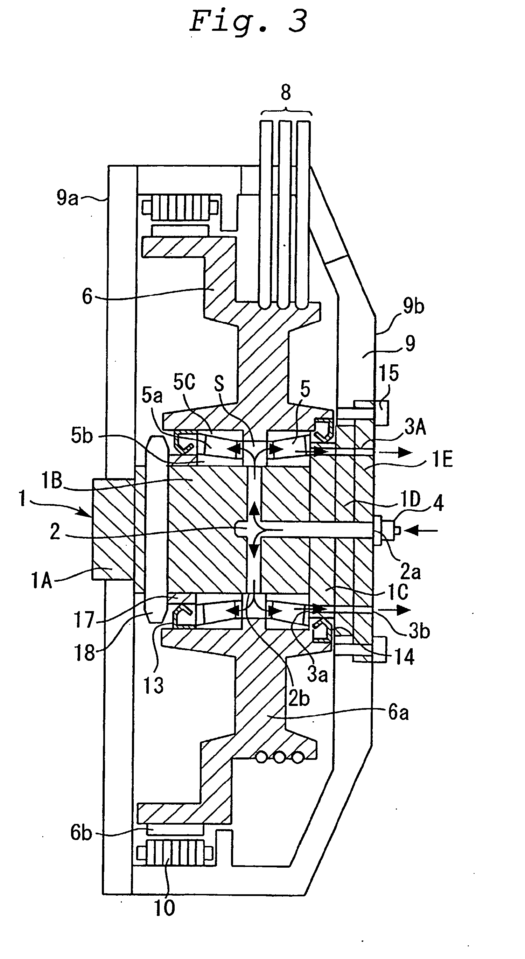

Fig. 3 is a schematic cross-sectional view showing a hoisting machine according to a third embodiment of the invention. The third embodiment differs from the first embodiment in terms of only the construction of the grease discharge passage provided in the spindle 1.

In Fig. 3, reference numeral 1 designates a spindle; 2 designates a grease feed passage provided in the spindle 1; 2a designates an entrance of the grease feed passage 2; 2b designates an exit of the grease feed passage 2; 3 designates a grease discharge passage provided in the spindle 1; 3a designates an entrance of the grease discharge passage 3; 3b designates an exit of the grease feed passage 3; and 4 designates a nipple provided at the entrance 2a of the grease feed passage 2.

Here, in relation to the grease feed passage 2 provided in the spindle 1 for effecting greasing operation, the entrance 2a is opened toward the outside of the housing 9 (i.e., the rear surface 9b of the housing 9). The exit 2b is opened toward the space S existing between the two bearings 5. The grease feed passage 2 is formed from a first passage extending from the entrance 2a toward the center of the step section 1B in substantially parallel with the spindle 1, and a plurality of second passages radially extending from the first passage to the exit 2b.

As in the case of the first embodiment, in relation to the grease discharge passage 3 provided in the spindle 1 for effecting greasing operation, the entrance 3a is opened toward the rolling members 5a of the bearings 5, and the exit 3b is opened toward the outside of the housing 9. Specifically, the entrance 2a of the grease feed passage 2 and the exit 3b of the grease discharge passage 3 are provided side by side in the exposed section of the spindle 1 exposed in the rear surface 9b of the housing 9.

As in the case of the first embodiment, in the hoisting machine of the elevator system having the foregoing construction, grease is supplied from the grease gun mated with the nipple 4 to the bearings 5. Specifically, grease is continuously supplied from the grease gun, and a downstream portion of the grease sequentially reaches the space S between the bearings 5 by way of the nipple 4 and the grease feed passage 2 as if being squeezed by an upstream portion of the grease. The grease that has reached the space S is discharged from the hoisting machine via the exit 3b by way of the two bearings 5 and the grease discharge passage 3.

As has been described, as in the case of the previous embodiments, the hoisting machine of the third embodiment enables easy and reliable greasing of the bearings 5 provided in the hoisting machine, thus improving ease of maintenance. Particularly, when discharge of grease is actively performed, the hoisting machine of the third embodiment is advantageous over the other embodiments. Namely, greasing operation and operation for discharging grease are performed on the same side of the hoisting machine (i.e., the rear surface 9b), and hence ease of operation is improved. In the third embodiment, work space is preferably ensured on the part of the elevator system facing the rear surface 9b of the hoisting machine, and the front surface 9a is preferably brought in proximity to the wall of the hoistway.

In the present invention, the grease feed passage 2 and the grease discharge passage 3, both being provided in the spindle 1, are not limited to those described in the embodiments and are susceptible to various layouts of routes. For instance, a route can be made by moving the second passage of the second grease feed passage 2 to the left in the Fig. 1 such that the exit 2b of the grease discharge passage 2 is opened toward the space between the bearings 5 and the seal 13.

In the respective embodiments, the hoisting machine is applied to the elevator system. However, the hoisting machine of the invention is not limited to these embodiments and can be applied to all lifts which transfer objects by actuating a pull cable passed around a hoisting machine.

As is obvious the invention is not limited to the embodiments and is susceptible to modifications other than those suggested in the embodiments, as required, within the technical scope of the invention. The number, positions, and geometries of the constituent members are not limited to those mentioned in the embodiments. The preferred number, positions, and geometries may be assumed in carrying out the invention.

## Claims

1. A hoisting machine having a spindle (1) and a bearing (5) to be engaged with the spindle, comprising
a grease feed passage (2) for supplying grease to the bearing (5) from the outside provided in the spindle (1); and
**characterised in that** the spindle (1) further has a grease discharge passage (3) for discharging, to the outside, grease supplied to the bearing (5).

2. The hoisting machine according to claim 1, further comprising:
a housing (9) which supports the spindle (1) and houses therein a part of the spindle (1), the bearing (5), and a sheave (6) supported on the spindle (1) by way of the bearing (5); and wherein
the spindle (1) has an entrance (2a) of the grease feed passage (2) opened in an exposed section exposed to the outside of the housing (9).

3. The hoisting machine according to claim 1 or 2, wherein the bearing (5) is embodied as two bearings which are engaged with each other while being spaced apart from each other in an axial direction of the spindle (1); and the spindle has an exit of the grease discharge passage (3) opened toward a space existing between the two bearings.

4. The hoisting machine according to any preceding claim, further comprising:
a housing (9) which supports the spindle (1) and houses therein a part of the spindle (1), the bearing (5), and a sheave (6) supported on the spindle (1) by way of the bearing (5); and wherein
the spindle (1) has an exit (3b) of the grease discharge passage (3) opened in an exposed section exposed to the outside of the housing (9); and
a seal (13, 14) is provided around a periphery of the bearing (5) for preventing splashing of the grease supplied to the bearing (5) within the housing (9).

5. The hoisting machine according to any preceding claim, wherein the bearing (5) is a roller bearing which has an inner ring (5b), an outer ring (5c), and a plurality of rolling elements (5a) remaining in contact with the inner (5b) and outer (5c) rings, and
the spindle (1) has an entrance (2a) of the grease feed passage (2) opened toward the rolling elements (5a) of the roller bearing.

6. An elevator system having the hoisting machine defined in any one of claims 1 through 5.

## Patentansprüche

1. Hebemaschine mit einer Spindel (1) und einem mit der Spindel in Eingriff zu bringenden Lager (5), aufweisend:
einen in der Spindel (1) vorgesehenen Schmiermittelzuführdurchgang (2) zum Bereitstellen eines Schmiermittels zum Lager (5) von Außen, und
**dadurch gekennzeichnet, dass** die Spindel (1) ferner einen Schmiermittelausstoßdurchgang (3) zum Ausstoßen eines zum Lager (5) bereitgestellten Schmiermittels nach Außen aufweist.

2. Hebemaschine gemäß Anspruch 1, ferner aufweisend:
ein Gehäuse (9), das die Spindel (1) stützt und darin einen Teil der Spindel (1), das Lager (5) und eine mittels des Lagers (5) an der Spindel (1) gestützte Scheibe (6) aufnimmt, und bei der
die Spindel (1) einen Eingang (2a) des Schmiermittelzuführdurchgangs (2) aufweist, der in einer freigelegten Sektion, die zum Äußeren des Gehäuses (9) freigelegt ist, geöffnet ist.

3. Hebemaschine gemäß Anspruch 1 oder 2, bei der das Lager (5) mit zwei Lagern ausgeführt ist, die miteinander in Eingriff sind, während sie voneinander in einer Axialrichtung der Spindel (1) beabstandet sind, und die Spindel einen Ausgang des Schmiermittelausstoßdurchgangs (3) aufweist, der in Richtung eines zwischen den zwei Lagern existierenden Raum geöffnet ist.

4. Hebemaschine gemäß einem der vorangegangenen Ansprüche, ferner aufweisend:
ein Gehäuse (9), das die Spindel (1) stützt und darin einen Teil der Spindel (1), das Lager (5) und eine mittels des Lagers (5) an der Spindel (1) gestützte Scheibe (6) aufnimmt, und bei der
die Spindel (1) einen Ausgang (3b) des Schmiermittelausstoßdurchgangs (3) aufweist, der in einer freigelegten Sektion, die zum Äußeren des Gehäuse (9) freigelegt ist, geöffnet ist, und
eine Dichtung (13, 14) um den Umfang des Lagers (5) zum Verhindern des Verspritzens des zum Lager (5) bereitgestellten Schmiermittels innerhalb des Gehäuses (9) vorgesehen ist.

5. Hebemaschine gemäß einem der vorangegangenen Ansprüche, bei der das Lager (5) ein Wälzlager ist, das einen Innenring (5b), einen Außenring (5c) und eine Vielzahl von Wälzelementen (5a) aufweist, die mit dem Innen- (5b) und dem Außenring (5c) in Kontakt bleiben, und
die Spindel (1) einen Eingang (2a) des Schmiermittelzuführdurchgangs (2) aufweist, der in Richtung der Wälzelemente (5a) des Wälzlagers geöffnet ist.

6. Aufzugsystem mit einer in einem der Ansprüche 1 bis 5 definierten Hebemaschine.

## Revendications

1. Machine de levage ayant un axe (1) et un palier (5) pour être mis en prise avec l'axe, comprenant
un passage d'alimentation en graisse (2), pour fournir de la graisse au palier (5) à partir de l'extérieur de, réalisé dans l'axe (1) ; et
**caractérisée en ce que** l'axe (1) a en outre un passage de décharge de graisse (3) pour décharger, à l'extérieur de, la graisse fournie au palier (5).

2. Machine de levage selon la revendication 1, comprenant en outre :
un logement (9) qui supporte l'axe (1) et loge en son sein une partie de l'axe (1), le palier (5) et une poulie (6) supportée sur l'axe (1) à l'aide du palier (5) ; et dans laquelle
l'axe (1) a une entrée (2a) du passage d'alimentation en graisse (2) ouverte dans une section exposée, exposée à l'extérieur du logement (9).

3. Machine de levage selon la revendication 1 ou 2, dans lequel le palier (5) est réalisé comme deux paliers qui sont en prise l'un avec l'autre tout en étant espacés l'un de l'autre dans une direction axiale de l'axe (1) ; et l'axe a une sortie du passage de décharge de graisse (3) ouverte vers un espace existant entre les deux paliers.

4. Machine de levage selon l'une quelconque des revendications précédentes, comprenant en outre :
un logement (9) qui supporte l'axe (1) et loge en son sein une partie de l'axe (1), le palier (5) et une poulie (6) supportée sur l'axe (1) à l'aide du palier (5) ; et dans laquelle
l'axe (1) a une sortie (3b) du passage de décharge de graisse (3) ouverte dans une section exposée, exposée à l'extérieur du logement (9) ; et
un joint (13, 14) est disposé autour d'une périphérie du palier (5) pour empêcher le barbotage de la graisse fournie au palier (5) à l'intérieur du logement (9).

5. Machine de levage selon l'une quelconque des revendications précédentes, dans laquelle le palier (5) est un palier à rouleaux qui a une bague intérieure (5b), une bague extérieure (5c), et une pluralité d'éléments de roulement (5a) restant en contact avec les bagues intérieure (5b) et extérieure (5c), et
l'axe (1) a une entrée (2a) du passage d'alimentation en graisse (2) ouverte vers les éléments de roulement (5a) du palier à rouleaux.

6. Système d'ascenseur ayant la machine de levage définie selon l'une quelconque des revendications 1 à 5.
